# EUROPÄISCHE PATENTANMELDUNG

(11) **EP 0 905 303 A2**
(43) Veröffentlichungstag der Anmeldung: **31.03.1999**
(21) Anmeldenummer: 98117022.8
(22) Anmeldetag: 09.09.1998
(51) Int. Cl.: D06N 5/00, E04D 5/10

(54) **Bituminöse Dachbahn**

(30) Priorität: 30.09.1997 DE 19743155
(71) Anmelder: ICOPAL GmbH, D-4712 Werne (DE)
(72) Erfinder: Graae, Niels, 59368 Werne (DE); Birkner, Christian, F-57380 Faulquemont (FR)
(74) Vertreter: Feder, Wolf-Dietrich, Dr. Dipl.-Phys.

(57) **Zusammenfassung**

Bituminöse Dachbahn bestehend aus einer Trägerschicht, (1) auf der an mindestens einer bei der Verlegung nach oben weisenden Seite mindestens eine Bitumenschicht (2) angeordnet ist, auf deren Oberseite ein Kunststoffvlies (5) aufgebracht ist. Die Dachbahn weist an ihrer Oberseite in Längsrichtung verlaufende wulst- oder rippenartige Vorsprünge auf, die durch sich in Längsrichtung der Bahn erstreckende streifenförmige Schichten (4) aus Sand gebildet sind, die zwischen der Bitumenschicht (2) und dem Kunststoffvlies (5) derart angeordnet sind, daß sie vom Kunststoffvlies überdeckt sind, wobei das Kunststoffvlies (5) in den Bereichen zwischen den streifenförmigen Sandschichten (4) mit der Bitumenschicht (2) verklebt ist. Durch diese Vorsprünge erhält die Oberseite der Bahn eine rutschfeste Struktur.

## Beschreibung

Die Erfindung betrifft eine bituminöse Dachbahn mit den Merkmalen aus dem Oberbegriff des Patentanspruchs 1.

Eine derartige Dachbahn ist bekannt und beispielsweise in EP 0 271 727A1 beschrieben. Diese bekannte Dachbahn hat den Nachteil, daß an den Stellen, wo das Kunststoffvlies im Bereich der noppenförmigen Vorsprünge in die Bitumenbeschichtung eingebettet ist, das Bitumen durch das Vlies hindurchdringt und dies führt Zu Verklebungen. Um dies zu vermeiden, muß eine nachträgliche Talkumierung oder Besandung stattfinden, um diese Stellen abzudecken. Weiterhin werden beim Begehen einer solchen Dachbahn die Noppen flachgetreten, so daß nach einiger Zeit die angestrebte Rutschfestigkeit stark verschlechtert wird.

Es ist weiterhin aus dem deutschen Gebrauchsmuster G 94 07 750 eine Schalungsbahn, insbesondere zur Vordeckung von Steildächern bekannt, bei der zur Verbesserung der Rutschfestigkeit, insbesondere bei nasser Oberfläche, auf die Oberseite ein Kunststoffvlies aufkaschiert ist, an dem ein aus Glasfaserfäden bestehendes Netz angeordnet ist, das mit dem Kunstoffvlies fest verbunden ist.

Nachteilig bei dieser Lösung ist, daß der Preis eines mit dem Netz aus Glasfaserfäden verstärkten Kunstsoffvlieses im Vergleich zum Preis eines normalen Kunststoffvlieses sehr hoch ist.

Der Erfindung liegt die Aufgabe zugrunde, eine bituminöse Dachbahn mit den Merkmalen aus dem Oberbegriff des Patentanspruchs 1 so auszubilden, daß ihre Oberfläche eine hohe Rutschfestigkeit erhält, die auch beim Begehen der Bahn erhalten bleibt, daß aber andererseits die Dachbahn kostengünstig hergestellt werden kann.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Dachbahn sind in den abhängigen Ansprüchen beschrieben.

Dadurch, daß die Vorsprünge bei der erfindungsgemäßen Dachbahn als streifenförmige Schichten aus Sand ausgebildet sind, wird verhindert, daß im Bereich der Vorsprünge ein Durchtränken des Kunststoffvlieses mit Bitumen stattfindet, so daß an dieser Stelle kein Verkleben auftreten kann. Weiterhin gewährleisten die streifenförmigen Sandschichten einen starren Untergrund und eine Oberflächenstruktur, die auch auf Dauer trittfest ist. Durch das auf die Oberfläche der Bitumenschicht an der Oberseite aufkaschierte Kunststoffvlies, das zwischen den in Längsrichtung verlaufenden Vorsprüngen mit der Bitumenschicht verklebt ist, wird ein Abrollen der Sandkörner innerhalb der streifenförmigen Schichten, die nicht ausreichend verankert sind, verhindert. Beim Aufstreuen der streifenförmigen Schichten aus Sand ist nicht zu vermeiden, daß auch eine sehr feine Abstreuung zwischen den Vorsprüngen stattfinden kann. Es wurde aber in vorteilhafter Weise festgestellt, daß hierdurch keine Schwächung der Haftung zwischen Kunststoffvlies und Bitumenschicht auftritt, sondern das im Gegenteil ein Durchtränken von Bitumen durch das Kunststoffvlies hindurch verhindert wird. Somit ist eine Nachbestreuung nicht notwendig und die Oberfläche der Dachbahn weist eine saubere Struktur der Vorsprünge auf.

Bei der üblichen Verlegungsart werden die Dachbahnen quer zum Gefälle, bzw. parallel zu First und Traufe verlegt. Die streifenförmigen Vorsprünge verlaufen dann auch quer zum Gefälle.

Wie weiter unten anhand von Ausführungsbeispielen erläutert, sind grundsätzlich zwei unterschiedliche Ausbildungen der erfindungsgemäßen Dachbahn möglich.

Es kann nämlich entweder an der bei der Verlegung nach unten weisenden Seite der Trägerschicht ebenfalls mindestens eine Bitumenschicht angeordnet sein, es ist aber auch möglich, bei einer entsprechend stärker ausgebildeten Trägerschicht auf eine durchgehende Bitumenschicht an der Unterseite zu verzichten. Dabei ist es aber auch in diesem Falle zweckmäßig, wenn die Unterseite der Dachbahn entlang beider Längskanten untere Randstreifen aus einer kaltselbstklebenden Bitumenschicht aufweist (Patentanspruch 11), was die Verlegung stark erleichtert.

Die erfindungsgemäße Dachbahn läßt sich in besonders einfacher und sicherer Weise verlegen, wobei insbesondere nach den Verfahrensansprüchen 18 und 19 vorgegangen werden kann.

Besonders vorteilhaft ist hierbei, daß bei der Verlegung der Dachbahn auf dem Untergrund die Dachbahn durch die kaltselbstklebende Bitumenschicht mit dem Untergrund fest verklebt ist, was zur Folge hat, daß die Nagelausreißkraft, die bei einer lose verlegten Dachbahn nur durch die Trägerschicht bestimmt wird, bei einer mit dem Untergrund verklebten Dachbahn einen mehrfach erhöhten Wert erreicht. So besitzt beispielsweise eine Dachbahn mit einer Trägerschicht aus fadenverstärktem Glasvlies üblicherweise eine Nagelausreißkraft von 60 Newton. Ist die gleiche Dachbahn bei der Vernagelung durch den kaltselbstklebenden Bitumenstreifen an der Unterseite mit dem Untergrund zusätzlich verklebt, so erreicht die Nagelausreißkraft einen Wert von mehr als 250 Newton.

Im folgenden werden anhand der beigefügten Zeichnungen zwei Ausführungsbeispiele für die erfindungsgemäße Dachbahn und die Art der Verlegung näher erläutert.

In den Zeichnungen zeigen:
Fig. 1 in einer stark vergrößerten schematischen Schnittdarstellung eine erste Ausführungsform einer bituminösen Dachbahn im Bereich ihres in Längsrichtung der Bahn gesehen linken Randes;
Fig. 2 in einer Darstellung analog Fig. 1 die Dachbahn im Bereich ihres in Längsrichtung der Bahn gesehen rechten Randes;
Fig. 3 eine Variante der Dachbahn nach Fig. 1 und 2 im Schnitt über ihre gesamte Breite bei stark überhöhtem Maßstab in Richtung der Bahndicke;
Fig. 4 eine andere Ausführungsform der Dachbahn in einer Darstellung analog Fig. 3;
Fig. 5 in stärker schematisierter Darstellung ein Schnitt durch einen Teil eines Daches mit verlegten Dachbahnen nach Fig. 3.

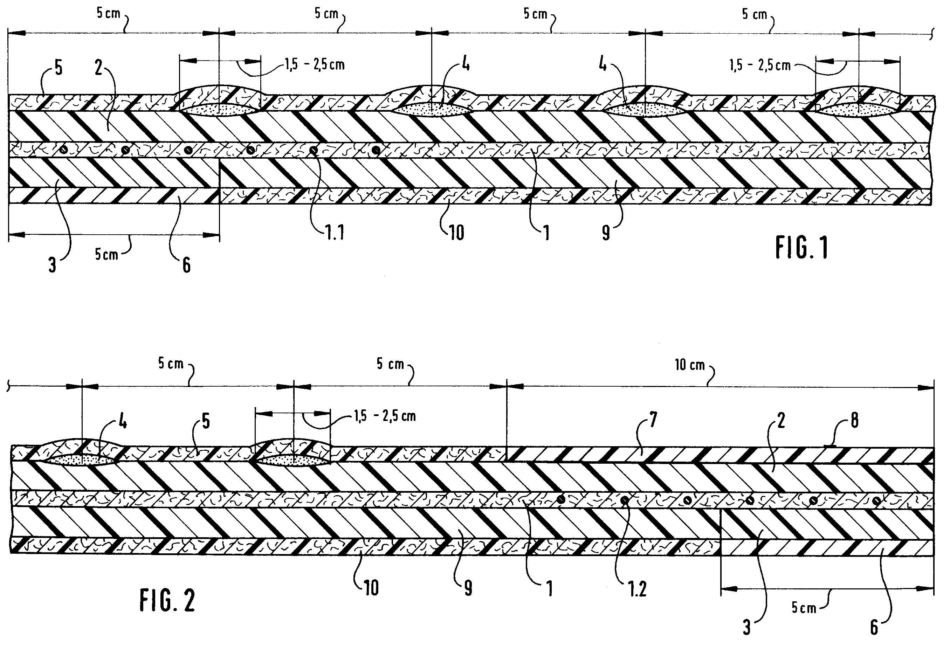

Die in den Fig. 1 und 2 dargestellte bituminöse Dachbahn besitzt eine Trägerschicht 1, die aus einem Glasvlies oder Glas-Verbundträger mit einem Flächengewicht zwischen 50 und 150 g/m² bestehen kann. Bei einem Glasvlies ist es zweckmäßig, in den Randbereichen zusätzlich Verstärkungsfäden 1.1 bzw. 1.2 vorzusehen, durch die sich eine höhere Nagelausreißkraft erreichen läßt. Die Trägerschicht kann aber auch aus einem Polyestervlies oder Polyester/Glas-Verbundträger mit einem Flächengewicht zwischen 70 und 200 g/m² bestehen.

Die bei der Ausführungsform nach Fig. 1 und 2 an beiden Seiten der Trägerschicht 1 vorgesehenen Bitumenschichten 2 und 9 bestehen aus Bitumen oder Polymerbitumen. Wie weiter unten anhand von Fig. 4 erläutert, kann die Bitumenschicht 9 an der Unterseite bei Verwendung einer stärkeren Trägerschicht aus einem Kunststoffvlies auch wegfallen.

Wie besonders gut aus den Fig. 1 und 2 zu ersehen, zeigt die Oberseite der Dachbahn eine Struktur aus in Längsrichtung der Bahn verlaufenden wulst- oder rippenartigen Vorsprüngen, die durch streifenförmige Schichten 4 aus Sand gebildet sind, über die sich ein Kunststoffvlies 5 hinweg erstreckt, das auf die Oberseite der Bahn aufkaschiert ist. Die Ausbildung ist dabei so, daß das Kunststoffvlies 5 in den Bereichen zwischen den streifenförmigen Randschichten 4 mit der Bitumenschicht 2 verklebt ist. Die streifenförmigen Schichten 4 aus Sand sind in die Oberfläche der Bitumenschicht 2 derart eingebunden, daß die Höhe der streifenförmigen Schichten 4 oberhalb der Bitumenschicht 2 größer ist als die Tiefe der Einbindung.

Die streifenförmigen Schichten 4 aus Sand können eine Breite von 1 bis 3cm, vorzugsweise 2cm aufweisen und der Abstand der streifenförmigen Schichten 4 aus Sand von Streifenmitte zu Streifenmitte kann 3 bis 10cm vorzugsweise 5cm betragen, wie in Fig. 1 und 2 angedeutet.

Die Sandmenge zur Bildung der streifenförmigen Schichten kann 50 bis 150 g/m² der Bahn betragen. Hierbei ist es vorteilhaft, wenn mindestens 70% des Sandes eine Korngröße von 200µ aufweist.

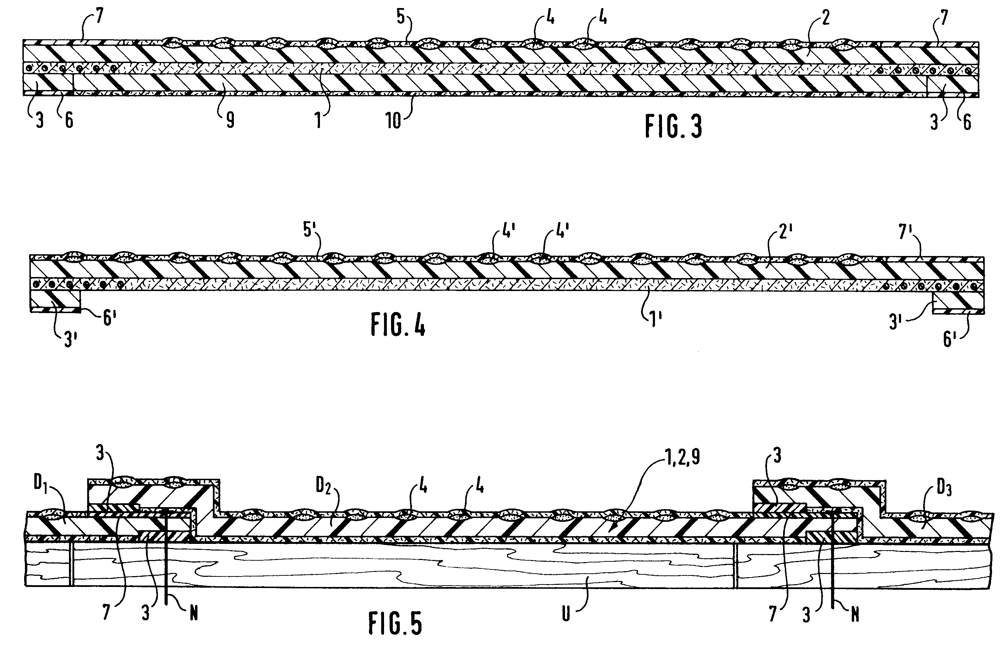

Bei der in Fig. 1 und 2 dargestellten Ausführungsform der Dachbahn erstreckt sich das Kunststoffvlies 5 auf der Oberseite in Querrichtung nur über einen Teil der Breite der Bahn, so daß an der rechten Längskante der Bahn ein oberer Randstreifen einer Breite von 10cm vom Kunststoffvlies 5 unbedeckt bleibt. Dieser obere Randstreifen ist mit einer Kunststoffolie aus Polyethylen, Polypropylen oder Polyester abgedeckt. Grundsätzlich kann dieser Randstreifen auch am linken Rand der Bahn vorgesehen sein, wie bei der Ausführungsvariante nach Fig. 3 dargestellt. In einem Abstand von ca. 2 bis 3 cm vom Rand besitzt die Kunststoffolie 7 eine Kennlinie 8, die ein optimales Vernageln der Dachbahn ermöglicht.

Die Bitumenschichten 9 an der Unterseite der Trägerschicht 1 erstreckt sich in Querrichtung an beiden Seiten nur über einen Teil der Bahnbreite, so daß Randbereiche von 5 cm Breite freibleiben. In diesen Randbereichen sind an die Bitumenschicht 9 anschließende untere Randstreifen 3 vorgesehen, die aus einer kaltselbstklebenden Bitumenschicht bestehen und an ihrer Außenseite mit einer abziehbaren Kunststoffolie 6 abgedeckt sind. Die Bitumenschicht 9 selbst ist im Bereich zwischen den unteren Randstreifen 3 an ihrer Außenseite mit einem Kunststoffvlies 10 aus Polyethylen, Polypropylen oder Polyester abgedeckt. Anstelle des Kunststoffvlieses kann auch eine Kunststoffolie oder eine mineralische Abstreuung verwendet werden. Wie Fig. 1 und 2 zu entnehmen, liegen die Bitumenschicht 9 und die unteren Randstreifen 3 bündig zueinander.

Fig. 4 zeigt eine andere Ausführungsform einer Dachbahn, die sich von der Ausführungsform nach Fig. 1 bis 3 dadurch unterscheidet, daß an der Unterseite der Trägerschicht 1' zwischen den unteren Randstreifen 3', die mit einer Kunststoffolie 6' abgedeckt sind, keine weitere Bitumenschicht (entsprechend der Bitumenschicht 9 in Fig. 1 bis 3) vorgesehen ist, was, wie oben erwähnt, bei einer verstärkten Trägerschicht aus einem Polyestervlies oder Polyestervlies/Glas-Verbundträger ohne weiteres möglich ist. An ihrer Oberseite entspricht die Dachbahn nach Fig. 4 der Dachbahn nach Fig. 1 und 2 mit den Vorsprüngen aus streifenförmigen Schichten 4' aus Sand, die von dem aufkaschierten Kunststoffvlies 5' überdeckt sind.

Am rechten Rand befindet sich ein oberer Randstreifen 7'.

Im folgenden wird anhand von Fig. 5 eine Möglichkeit der Verlegung einer Dachbahn nach Fig. 1 und 2 näher beschrieben.

In Fig. 5 ist ein Teil einer Unterlage U dargestellt, auf deren Oberseite nebeneinanderliegend Dachbahnen D1, D2 und D3 angeordnet sind. Die Dachbahn D1 wird zuerst verlegt und genagelt. Anschließend wird die Dachbahn D2 verlegt. Bei geneigten Dächern liegt D1 tiefer als D2. Die Verlegung geschieht in der Weise, daß an der Längskante der ersten Dachbahn D1 bzw. D2 die benachbarte Dachbahn D2 bzw. D3 so aufgelegt wird, daß die erste Dachbahn D1 bzw. D2 an ihrer Oberseite im Bereich des oberen Randstreifens 7 überlappt wird derart, daß die zweite Dachbahn D2 bzw. D3 mit ihrem unteren Randstreifen 3 unmittelbar auf dem oberen Randstreifen 7 der ersten Dachbahn D1 bzw. D2 aufliegt, so daß die beiden Randstreifen 3 und 7 miteinander verklebt werden. Die jeweils in Fig. 5 rechte Kante der Dachbahnen D1 und D2 ist mit der Unterlage U über den unteren Randstreifen 3 verklebt und zusätzlich mit Nägeln N vernagelt. Der Nagel, der an der Stelle der Kennlinie 8 (Fig. 2) die Dachbahnen auf dem Untergrund befestigt, durchdringt die Dachbahnen D1 bzw. D2 im Bereich des kaltselbstklebenden Randstreifens 3.

Die Anordnung der Dachbahnen D1, D2 und D3 ist in Fig. 5 in sehr schematischer Weise dargestellt. Dabei ist aus zeichnerischen Gründen in den Überlappungsbereichen die dort auftretende Versetzung rechtwinklig dargestellt, obwohl hier natürlich ein schräg verlaufender Übergangsbereich besteht.

## Patentansprüche

1. Bituminöse Dachbahn, bestehend aus einer Trägerschicht, auf der an mindestens einer, bei der Verlegung nach oben weisenden Seite mindestens eine Bitumenschicht angeordnet ist, auf deren Oberseite ein Kunststoffvlies aufgebracht ist und die an der bei der Verlegung nach oben weisenden Seite in Längsrichtung der Bahn verlaufende, wulst- oder rippenartige Vorsprünge aufweist, dadurch gekennzeichnet, daß die Vorsprünge durch in Längsrichtung der Bahn erstreckende, streifenförmige Schichten (4, 4') aus Sand gebildet sind, die zwischen der Bitumenschicht (2, 2') und dem Kunststoffvlies (5, 5') derart angeordnet sind, daß sie vom Kunststoffvlies überdeckt sind, wobei das Kunststoffvlies (5, 5') in den Bereichen zwischen den streifenförmigen Sandschichten (4, 4') mit der Bitumenschicht (2, 2') verklebt ist.

2. Dachbahn nach Anspruch 1, dadurch gekennzeichnet, daß die streifenförmigen Schichten (4, 4') aus Sand in die Oberfläche der Bitumenschicht (2, 2') eingebunden sind derart, daß die Höhe der streifenförmigen Schichten (4, 4') oberhalb der Bitumenschicht (2, 2') größer ist als die Tiefe der Einbindung.

3. Dachbahn nach Anspruch 1 oder 2, dadurch gekennzeichnet, daß die streifenförmigen Schichten (4, 4') aus Sand eine Breite von 1 bis 3 cm aufweisen.

4. Dachbahn nach einem der Ansprüche 1 bis 3, dadurch gekennzeichnet, daß der Abstand der streifenförmigen Schichten (4, 4') aus Sand von Streifenmitte zu Streifenmitte 3 bis 10 cm beträgt.

5. Dachbahn nach einem der Ansprüche 1 bis 4, dadurch gekennzeichnet, daß die Sandmenge zur Bildung der streifenförmigen Schichten (4, 4') 100 bis 150 g/m² Bahn beträgt.

6. Dachbahn nach einem der Ansprüche 1 bis 5, dadurch gekennzeichnet, daß mindestens 70% des Sandes eine Korngröße von 200µ aufweist.

7. Dachbahn nach einem der Ansprüche 1 bis 6, dadurch gekennzeichnet, daß das Kunststoffvlies (5, 5') auf der Oberseite ein Polypropylen- oder Polyester-Vlies mit einem Flächengewicht zwischen 10 bis 50 g/m² vorzugsweise 15 g/m² ist.

8. Dachbahn nach einem der Ansprüche 1 bis 7, dadurch gekennzeichnet, daß das Kunststoffvlies (5, 5') auf der Oberseite sich in Querrichtung der Bahn nur über einen Teil der Breite erstreckt derart, daß an mindestens einer Längskante der Bahn ein oberer Randstreifen der Bitumenschicht (2, 2') vorgegebener Breite vom Kunststoffvlies (5, 5') unbedeckt bleibt.

9. Dachbahn nach Anspruch 8, dadurch gekennzeichnet, daß jeder obere Randstreifen eine Breite von 5 bis 15 cm aufweist.

10. Dachbahn nach Anspruch 8 oder 9, dadurch gekennzeichnet, daß jeder obere Randstreifen mit einer Kunststoffolie (7, 7') abgedeckt ist.

11. Dachbahn nach einem der Ansprüche 1 bis 10, dadurch gekennzeichnet, daß an der bei der Verlegung nach unten weisenden Seite der Bahn entlang beider Längskanten untere Randstreifen (3, 3') vorgegebener Breite aus einer kaltselbstklebenden Bitumenschicht angeordnet sind, die mit einer abziehbaren Folie (6, 6') abgedeckt sind.

12. Dachbahn nach Anspruch 11, dadurch gekennzeichnet, daß die Breite der unteren Randstreifen (3, 3') 3 bis 10 cm, vorzugsweise 5 cm beträgt.

13. Dachbahn nach einem der Ansprüche 1 bis 12, dadurch gekennzeichnet, daß die Trägerschicht (1, 1') aus einem vorzugsweise fadenverstärkten Glasvlies oder Glas-Verbundträger mit einem Flächengewicht zwischen 50 und 150 g/m² besteht.

14. Dachbahn nach einem der Ansprüche 1 bis 12, dadurch gekennzeichnet, daß die Trägerschicht (1, 1') aus einem Polyestervlies oder Polyester/Glas-Verbundträger mit einem Flächengewicht zwischen 70 und 200 g/m² besteht.

15. Dachbahn nach einem der Ansprüche 1 bis 14, dadurch gekennzeichnet, daß an der bei der Verlegung nach unten weisenden Seite der Trägerschicht mindestens eine Bitumenschicht (9) angeordnet ist.

16. Dachbahn nach einem der Ansprüche 11 bis 14, in Verbindung mit Anspruch 15, dadurch gekennzeichnet, daß mindestens die äußerste, an der bei der Verlegung nach unten weisenden Seite der Trägerschicht angeordnete Bitumenschicht (9) zwischen den unteren Randstreifen und bündig zu ihnen liegt.

17. Dachbahn nach Anspruch 15 oder 16, dadurch gekennzeichnet, daß die äußerste, an der bei der Verlegung nach unten weisenden Seite der Trägerschicht angeordnete Bitumenschicht (9) an ihrer Außenseite mit einem Kunststoffvlies (10) aus Polyethylen, Polypropylen oder Polyester abgedeckt ist.

18. Verfahren zur Verlegung einer Dachbahn nach Anspruch 11, dadurch gekennzeichnet, daß die Dachbahn (D1, D2) an mindestens einer ihrer Längskanten mittels des an der nach unten weisenden Seite angeordneten selbstklebenden Randstreifens (3) auf den Untergrund (U) aufgeklebt und im Bereich dieses Randstreifens zusätzlich vernagelt (N) wird.

19. Verfahren zum Verlegen von Dachbahnen nach Anspruch 11 und einem der Ansprüche 8 bis 10, dadurch gekennzeichnet, daß jeweils an der Längskante einer ersten Dachbahn (D1, D2) die benachbarte zweite Dachbahn (D2, D3) so aufgelegt wird, daß sie die erste Dachbahn (D1, D2) an deren Oberseite im Bereich des oberen Randstreifens (7) überlappt derart, daß die zweite Dachbahn (D2, D3) mit ihrem unteren Randstreifen (3) unmittelbar auf dem oberen Randstreifen (7) der ersten Dachbahn aufliegt und mit diesem verklebt wird.

20. Dachbahn nach einem der Ansprüche 1 bis 4, dadurch gekennzeichnet, daß die Sandmenge zur Bildung der streifenförmigen Schichten (4, 4') 50 bis 100 g/m² Bahn beträgt.
